(19) Europäisches Patentamt European Patent Office Office européen des brevets

(11) **EP 2 886 454 B1**

(12) **FASCICULE DE BREVET EUROPEEN**

(45) Date de publication et mention de la délivrance du brevet:
**04.04.2018 Bulletin 2018/14**

(51) Int Cl.:
***B64C 25/40*** *(2006.01)*    ***H02P 23/00*** *(2016.01)*
***H02P 29/10*** *(2016.01)*

(21) Numéro de dépôt: **14197769.4**

(22) Date de dépôt: **12.12.2014**

(54) **Procédé de commande d'un moteur électrique d'entraînement en rotation d'une roue d'aéronef.**

Verfahren zur Steuerung eines Elektromotors mit Drehantrieb eines Luftfahrzeugrads

A method of controlling an electric motor for driving rotation of an aircraft wheel

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2013 FR 1363325**

(43) Date de publication de la demande:
**24.06.2015 Bulletin 2015/26**

(73) Titulaire: **Safran Landing Systems**
**78140 Vélizy-Villacoublay (FR)**

(72) Inventeurs:
• **Gorce, Clément**
**78140 VELIZY-VILLACOUBLAY (FR)**
• **Lemay, David**
**78140 VELIZY-VILLACOUBLAY (FR)**

(74) Mandataire: **Parzy, Benjamin Alain et al**
**Cabinet Boettcher**
**16, rue Médéric**
**75017 Paris (FR)**

(56) Documents cités:
EP-A1- 2 390 179        EP-A1- 2 439 604
WO-A1-2009/043082    WO-A1-2013/019301
WO-A2-2006/078322    US-A- 3 807 664
US-A1- 2009 058 346   US-A1- 2009 218 440
US-A1- 2009 261 197   US-A1- 2012 138 734

## Description

L'invention concerne un procédé de commande d'un moteur électrique d'entraînement en rotation d'une roue d'aéronef.

### ARRIERE PLAN DE L'INVENTION

Actuellement, le contrôle de la vitesse au sol d'un aéronef est réalisé manuellement par un pilote de l'aéronef soit par un contrôle de la poussée motrice produite par les moteurs de propulsion de l'aéronef, soit en utilisant le système de freinage des roues de l'aéronef, soit, plus rarement, par un contrôle couplé de la poussée et du freinage. Cette manière de contrôler la vitesse au sol de l'aéronef est peu précise et oblige le pilote à adapter le pilotage aux conditions environnementales, au revêtement de la piste, et à des caractéristiques structurelles de l'aéronef (masse, etc.).
Le contrôle de l'orientation de l'aéronef, quant à lui, est réalisé manuellement par le pilote qui utilise un dispositif d'orientation des roues avant de l'aéronef. Le pilote contrôle en temps réel un angle de rotation des roues avant pour que l'aéronef suive une trajectoire recherchée. Cette manière de contrôler l'orientation de l'aéronef nécessite que le pilote réalise de nombreuses opérations de pilotage en temps réel.

### OBJET DE L'INVENTION

L'invention a pour objet un procédé de commande d'un moteur électrique d'entraînement en rotation d'une roue d'aéronef permettant de réaliser un contrôle de la vitesse au sol de l'aéronef plus précis, plus répétable, et fournissant une assistance au contrôle de l'orientation de l'aéronef.

### RESUME DE L'INVENTION

En vue de la réalisation de ce but, on propose un procédé de commande d'un moteur électrique d'entraînement en rotation d'une roue d'aéronef destiné à générer une commande de couple pour commander le moteur. Selon l'invention, le procédé comprend la mise en oeuvre :

- d'une première boucle d'asservissement ayant pour signal d'entrée une consigne de vitesse, pour signal de retour un signal représentatif de la vitesse de la roue ou de l'aéronef, et pour signal de sortie une consigne d'accélération ;
- d'une deuxième boucle d'asservissement ayant pour signal d'entrée la consigne d'accélération, pour signal de retour un signal représentatif de l'accélération de la roue ou de l'aéronef, et pour signal de sortie la commande de couple.

L'utilisation de moteurs électriques d'entraînement en rotation de roues d'aéronef et d'une régulation en vitesse et en accélération de la commande de couple commandant ces moteurs permettent de réaliser un contrôle de la vitesse au sol précis et très peu sensible à l'environnement extérieur et à des caractéristiques structurelles de l'aéronef. La mise en oeuvre d'une telle régulation permet en outre d'appliquer une commande de couple propre à chaque roue. La commande de couple peut donc être corrigée selon les atterrisseurs et selon la position des roues au sein d'un atterrisseur en fonction de l'angle d'orientation de l'aéronef souhaité, ce qui permet de fournir une assistance au contrôle de l'orientation.

### BREVE DESCRIPTION DES DESSINS

L'invention sera mieux comprise à la lumière de la description qui suit en référence aux figures des dessins annexés parmi lesquelles :

- les figures 1a et 1b forment deux parties d'une seule et même figure qui représente un schéma-bloc illustrant le procédé de commande de l'invention ;
- la figure 2 est un graphique illustrant une fonction de limitation de l'accélération de la roue en fonction de la vitesse sol de l'aéronef utilisable dans la première boucle d'asservissement ;
- la figure 3 est un graphique illustrant l'effet de la fonction de limitation sur le couple appliqué par le moteur électrique en fonction de la vitesse de la roue ;
- la figure 4 est un graphique illustrant un premier couple maximum, une commande de couple à destination du moteur électrique et une marge de couple existant entre le premier couple maximum et la commande de couple, en fonction du temps ;
- la figure 5 est un graphique similaire à celui de la figure 4 représentant directement la marge de couple ;

- la figure 6 est une vue schématique des roues de l'aéronef lors d'un virage de l'aéronef.

DESCRIPTION DETAILLEE DE L'INVENTION

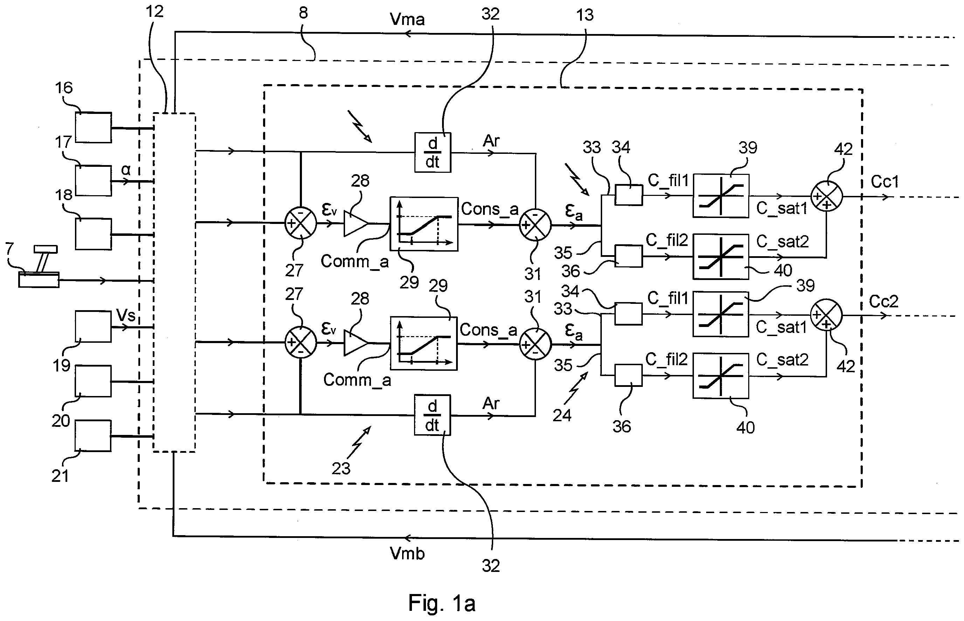

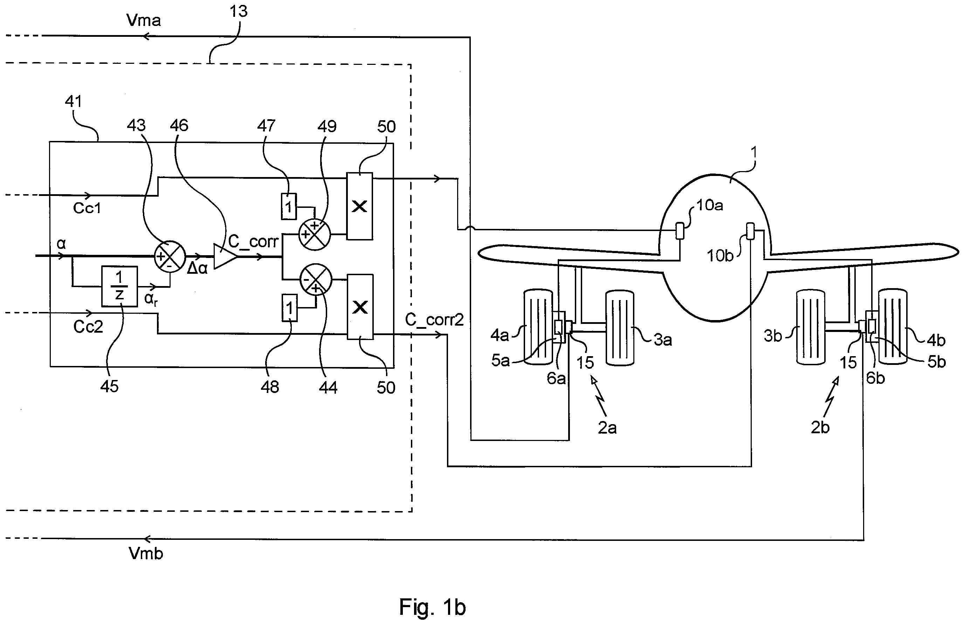

En référence aux figures 1a et 1b, l'invention est ici mise en oeuvre dans un aéronef 1 de type Airbus A320 comportant un premier atterrisseur principal 2a muni d'une première roue intérieure 3a et d'une première roue extérieure 4a, un deuxième atterrisseur principal 2b muni d'une deuxième roue intérieure 3b et d'une deuxième roue extérieure 4b et un atterrisseur auxiliaire muni de deux roues orientables (non visible sur la figure 1).

Chaque roue extérieure 4a, 4b est ici équipée d'un actionneur électromécanique d'entraînement respectif 5a, 5b destiné à entraîner cette roue en rotation. L'aéronef 1 peut ainsi être déplacé au sol sans utiliser les moteurs de propulsion de l'aéronef.

Chaque actionneur électromécanique d'entraînement 5a, 5b comporte un moteur électrique respectif 6a, 6b, ici un moteur triphasé synchrone à aimants permanents.

Les moteurs électriques des actionneurs électromécaniques d'entraînement 5 sont commandés par un pilote de l'aéronef 1. En agissant sur une manette de pilotage au sol 7 de l'aéronef 1 située dans le cockpit de l'aéronef 1, le pilote génère un ordre de vitesse Ov qui est transmis à une unité de contrôle centralisée 8. L'unité de contrôle centralisée 8 transforme cet ordre de vitesse Ov en une première commande de couple Cc1 à destination d'une première unité de puissance 10a associée au moteur électrique 6a de la première roue extérieure 4a, et en une deuxième commande de couple Cc2 à destination d'une deuxième unité de puissance 10b associée au moteur électrique 6b de la deuxième roue extérieure 4b. Les unités de puissance 10 transforment les commandes de couple en des courants de commande fournis aux moteurs 6 pour que ceux-ci délivrent les couples correspondants aux commandes de couple.

L'unité de contrôle centralisée 8 comporte un module d'acquisition 12 et un module de traitement 13.

Le module d'acquisition 12 est connecté à un certain nombre d'équipements embarqués communiquant avec l'unité de contrôle centralisée 8, et est destiné à recevoir, à transmettre, et éventuellement à mettre en forme des données échangées avec ces équipements embarqués. Parmi ces équipements embarqués, on trouve bien sûr la manette de pilotage 7 évoquée plus tôt. On trouve aussi un certain nombre de capteurs : des capteurs de vitesse de roue 15 associés à la première roue extérieure 4a et à la deuxième roue extérieure 4b, des capteurs de courant 16 associés à chaque moteur électrique 6a, 6b des actionneurs électromécanique d'entraînement 5a, 5b, un capteur d'orientation 17 des roues orientables de l'atterrisseur auxiliaire de l'aéronef 1, etc. On trouve enfin divers calculateurs ou concentrateurs de données appartenant à divers systèmes de l'aéronef 1 coopérant avec l'unité de contrôle : système de freinage de l'aéronef 18, système de type ADIRU 19 (pour Air Data Inertial Reference Unit) fournissant à l'unité de contrôle des données telles que la vitesse sol Vs de l'aéronef 1, contrôleur de puissance électrique 20 fournissant à l'unité de contrôle centralisée des données relatives à un état électrique ou thermique des générateurs de puissance électrique de l'aéronef, etc.

Le module d'acquisition 12 transforme l'ordre de vitesse Ov en une consigne de vitesse de rotation Cons_v commune au moteur électrique 6a de la première roue extérieure 4a et au moteur électrique 6b de la deuxième roue extérieure 4b.

Le module de traitement 13, quant à lui, met en oeuvre le procédé de commande de l'invention, qui consiste en une régulation en vitesse et en accélération d'une commande en couple de chaque moteur électrique 6. Le module de traitement 13 reçoit pour cela du module d'acquisition 12 les consignes de vitesse Cons_v et génère la première commande de couple Cc1 et la deuxième commande de couple Cc2.

Pour chaque moteur 6 de chaque roue extérieure 4, le procédé de l'invention comprend la mise en oeuvre d'une première boucle d'asservissement 23 et d'une deuxième boucle d'asservissement 24.

Pour chaque moteur 6, la première boucle d'asservissement 23 a pour signal d'entrée la consigne de vitesse Cons_v.

La première boucle d'asservissement 23 comporte un premier soustracteur 27 qui retranche à la consigne de vitesse Cons_v un signal de retour, en l'occurrence un signal représentatif de la vitesse de rotation de la roue Vr, et qui calcule ainsi une erreur de vitesse $\varepsilon v$. Le signal représentatif de la vitesse de rotation de la roue Vr est ici une vitesse de rotation mesurée Vma pour la première roue extérieure 4a et une vitesse de rotation mesurée Vmb pour la deuxième roue extérieures 4b. Ces vitesses de rotation mesurées Vma, Vmb sont mesurées par les capteurs de vitesse 15 des première et deuxième roues extérieures 4a, 4b et transmises au module d'interface 12. Le module d'interface 12 génère le signal représentatif de la vitesse de rotation de la roue Vr et le transmet au module de traitement 13.

La première boucle d'asservissement 23 comporte de plus un régulateur de vitesse destiné à transformer l'erreur de vitesse en une commande d'accélération Comm_a. Le régulateur de vitesse est ici un premier bloc de gain 28 destiné à multiplier l'erreur de vitesse $\varepsilon v$ par un gain prédéterminé.

La première boucle d'asservissement 23 comporte en outre une fonction de limitation 29 pour limiter la commande d'accélération Comm_a et générer une consigne d'accélération Cons_a utilisée comme signal d'entrée de la deuxième boucle d'asservissement 24.

La fonction de limitation est une pente d'accélération en fonction de la vitesse sol Vs de l'aéronef 1, ladite vitesse sol Vs étant transmises par le système de type ADIRU 19 à l'unité de contrôle centralisée 8.

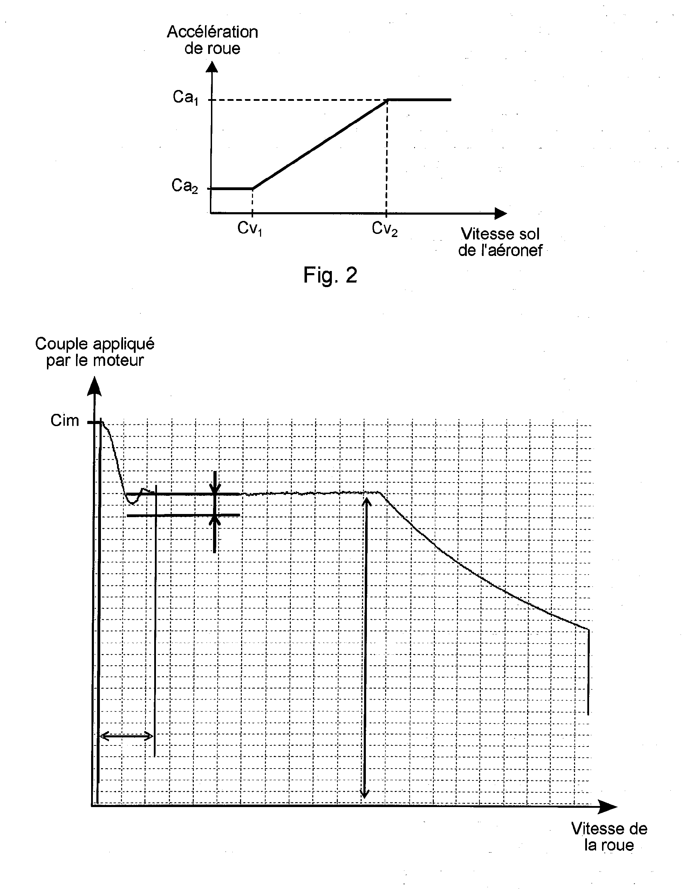

En référence à la figure 2, cette pente d'accélération est ici définie par quatre constantes réglables : une première constante d'accélération ca1, une deuxième constante d'accélération ca2, une première constante de vitesse cv1 et une deuxième constante de vitesse cv2.

En référence à la figure 3, la première constante d'accélération ca1 définit un couple stabilisé Cs requis pendant une accélération constante de la roue extérieure 4 de l'aéronef 1. Plus la valeur de cette première constante d'accélération ca1 est élevée, plus le couple stabilisé Cs que peut délivrer le moteur électrique 6 de la roue extérieure 4 est important. Le réglage de cette constante ca1 permet d'adapter le couple stabilisé Cs à une résistance de roulement de la roue extérieure 4.

La deuxième constante d'accélération ca2 est utilisée pour définir un couple initial maximum Cim requis pour entrainer la roue extérieure 4 lorsque l'aéronef 1 est à l'arrêt. Plus la valeur de cette deuxième constante d'accélération ca2 est élevée, plus le couple initial maximum Cim que peut délivrer le moteur électrique 6 de la roue extérieure 4 est important.

La première constante de vitesse cv1 est utilisée pour définir un couple de transition Ct correspondant à la différence entre le couple initial et le couple stabilisé. La valeur de la première constante de vitesse cv1 doit être proche d'une valeur de vitesse de la roue extérieure 4 lorsque l'accélération constante est atteinte, ce qui permet d'éviter une chute de couple importante entre le couple initial et le couple stabilisé.

Enfin, la deuxième constante de vitesse cv2 est utilisée pour définir un temps T nécessaire au moteur 6 pour, à partir du moment où le couple initial est appliqué, atteindre le couple stabilisé : plus la valeur de cette deuxième constante de vitesse est élevée, plus ce temps T est important.

La deuxième boucle d'asservissement 24 a pour entrée la consigne d'accélération Cons_a générée par la première boucle d'asservissement 23.

La deuxième boucle d'asservissement 24 comporte un deuxième soustracteur 31 qui retranche à la consigne d'accélération Cons_a un signal de retour, en l'occurrence un signal représentatif de l'accélération de la roue Ar, et qui calcule ainsi une erreur d'accélération $\varepsilon$a. Le signal représentatif de l'accélération de la roue Ar est ici obtenu par dérivation du signal représentatif de la vitesse de la roue Vr, c'est-à-dire par dérivation de la vitesse Vma pour la première roue extérieure 4a et de la vitesse Vmb pour la deuxième roue extérieures 4b. La dérivation est réalisée par un bloc dérivateur 32.

La deuxième boucle d'asservissement comporte en outre une première branche 33 comportant un filtre passe-bas 34 et une deuxième branche 35 parallèle à la première branche 33 comportant un intégrateur 36. Chacune des branches a pour entrée l'erreur d'accélération $\varepsilon$a.

Le filtre passe-bas 34 de la première branche 33 est un filtre de premier ordre destiné à rendre la régulation suffisamment réactive à des perturbations comme celles associées à une mise en entraînement de la roue, à une pente d'une piste sur laquelle roule l'aéronef, au vent, etc. Le filtre passe-bas 34 a pour entrée l'erreur d'accélération $\varepsilon$a et pour sortie un premier couple filtrée C_fil1. Le filtre passe-bas 34 a ici pour fonction de transfert :

$$K_1 \cdot \frac{1}{1 - T_1 \cdot z^{-1}} \quad ,$$

où $K_1$, $T_1$ sont des constantes réglables.

L'intégrateur 36, quant à lui, ne génère aucune erreur statique et permet à la régulation de présenter un temps de réponse acceptable. L'intégrateur 36 a pour entrée l'erreur d'accélération $\varepsilon$a et pour sortie un deuxième couple filtré C_fil2. L'intégrateur 36 a ici pour fonction de transfert :

$$K_2 \cdot \frac{1}{1 - z^{-1}} \quad ,$$

où $K_2$ est une constante réglable.

La première branche 33 comporte de plus une première fonction de saturation 39 de couple ayant pour entrée le premier couple filtré C_fil1 et pour sortie une première sortie de couple C-sat1. La deuxième branche 34 comporte quant à elle une deuxième fonction de saturation 40 de couple ayant pour entrée le deuxième couple filtré C_fil2 et pour sortie une deuxième sortie de couple C_sat2.

La première fonction de saturation 39 définit un premier seuil de couple Sc1 qui limite le premier couple filtré. La deuxième fonction de saturation définit un deuxième seuil de couple Sc2 ayant pour valeur la valeur du premier seuil de couple Sc1 à laquelle est retranchée la valeur de la sortie du filtre passe-bas, c'est-à-dire le premier couple filtré C_fil1.

Ainsi, si le premier couple filtré C_fil1 a une valeur maximale égale à 120 N.m (newtons-mètre) et si la valeur du premier seuil de couple Sc1 est de 200 N.m, alors la deuxième sortie de couple C_sat2 est limitée par un couple de 80 N.m.

La deuxième boucle d'asservissement 24 comporte enfin un premier sommateur 42 qui additionne la première sortie de couple C_sat1 et la deuxième sortie de couple C_sat2 et génère ainsi la commande de couple à destination du moteur de l'actionneur électromécanique de la roue.

Le procédé de l'invention est ainsi mis en oeuvre pour générer une première commande de couple Cc1 à destination de l'unité de puissance 10a du moteur électrique 6a associé à la première roue extérieure 4a et une deuxième commande de couple Cc2 à destination de l'unité de puissance 10b du moteur électrique 6b de la deuxième roue extérieure 4b.

Le procédé de l'invention comprend de plus la mise en oeuvre d'une fonction d'assistance 41 à l'orientation de l'aéronef 1. Cette fonction d'assistance 41 a pour but de corriger la première commande de couple Cc1 et la deuxième commande de couple Cc2 en fonction d'un angle d'orientation α des roues orientables de l'atterrisseur auxiliaire de l'aéronef 1, de manière à assister les roues orientables de l'atterrisseur auxiliaire pour orienter l'aéronef 1.

La fonction d'assistance 41 est mise en oeuvre dans le module de traitement 13, et a pour entrées la première commande de couple Cc1, la deuxième commande de couple Cc2 et l'angle d'orientation α. La fonction d'assistance 41 comporte un troisième et un quatrième soustracteurs 43, 44, un bloc retard unitaire 45, un deuxième, un troisième et un quatrième blocs de gain 46, 47, 48, un deuxième sommateur 49 et deux multiplieurs 50, 51.

Le troisième soustracteur 43 soustrait à l'angle d'orientation α un angle d'orientation retardé αr résultant de l'action du bloc retard unitaire 45 sur l'angle de rotation α. Le résultat de cette soustraction est une variation d'angle Δα, qui est nulle lorsque l'angle d'orientation α est constant dans le temps et non nulle sinon. Cette variation d'angle Δα est ensuite multipliée par le deuxième bloc de gain 46 présentant un gain configurable et transformant la variation d'angle Δα en un couple de correction C_corr. Ce couple de correction C_corr est appliqué en entrée du deuxième sommateur 49 et en entrée du quatrième soustracteur 44. Le troisième et le quatrième bloc de gain 47, 48, qui présentent un gain unitaire, sont reliés respectivement à une deuxième entrée du deuxième sommateur 49 et à une deuxième entrée du quatrième soustracteur 44. La sortie du deuxième sommateur 49 est reliée à une première entrée du premier multiplieur 50. La sortie du quatrième soustracteur 44 est reliée à une première entrée du deuxième multiplieur 51. La première commande de couple Cc1 et la deuxième commande de couple Cc2 sont reliées respectivement à une deuxième entrée du premier multiplieur 50 et à une deuxième entrée du deuxième multiplieur 51. La sortie du premier multiplieur est une première commande de couple corrigée C_corr1 à destination du moteur 6a de la première roue extérieure 4a. La sortie du deuxième multiplieur 51 est une deuxième commande de couple corrigée C_corr2 à destination du moteur 6b de la deuxième roue extérieure 4b.

La différence entre la première commande de couple corrigée C_corr1 et la deuxième commande de couple corrigée C_corr2 est un couple différentielle C_diff qui tend à orienter l'aéronef 1 dans le sens de l'angle d'orientation α.

Avantageusement, la fonction d'assistance 41 à l'orientation de l'aéronef 1 est activée et désactivée par pin-programming. L'unité de contrôle centralisée est munie à cet effet d'un connecteur de configuration intégré. En connectant à ce connecteur de configuration intégré un connecteur de configuration externe muni de broches présentant une première configuration électrique, on active la fonction d'assistance 41 à l'orientation de l'aéronef 1. En connectant à ce connecteur de configuration intégré le connecteur de configuration externe dont les broches présentent une deuxième configuration électrique, on active la fonction d'assistance 41 à l'orientation de l'aéronef 1.

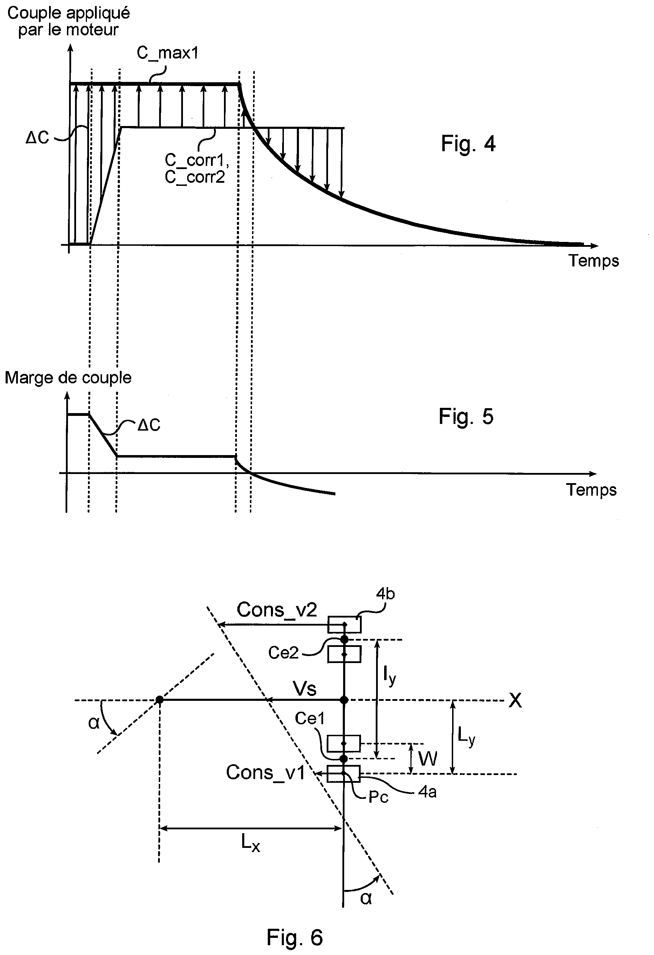

En référence aux figures 4 et 5, le procédé de l'invention comporte de plus la mise en oeuvre, pour chaque moteur électrique, d'une fonction d'anti-saturation. La fonction d'anti-saturation est réalisée dans l'unité de puissance 10 associée au moteur électrique 6. La fonction d'anti-saturation calcule une marge de couple ΔC existant entre un premier couple maximum C_max1 pour le moteur électrique 6 en question, et une commande de couple corrigée C_corr1, C_corr2 en sortie de la deuxième boucle d'asservissement 24. Si la marge de couple ΔC est positive, la fonction d'anti-saturation autorise une commande de couple plus importante. Si la marge de couple ΔC est négative, la fonction d'anti-saturation diminue la commande de couple jusqu'au couple maximum admissible. Le premier couple maximum C_max1 dépend des caractéristiques du moteur et de la vitesse de rotation du moteur.

La marge de couple ΔC visible sur la figure 4 correspond à un déplacement au sol de l'aéronef 1 vers l'avant. Pour définir la marge de couple ΔC dans le cas d'un déplacement de l'aéronef 1 vers l'arrière, on utilise une valeur absolue de la commande de couple corrigée Ccorr que l'on retranche au premier couple maximum C_max1 pour obtenir une marge de couple ΔC semblable à la marge correspondant à un déplacement au sol de l'aéronef vers l'avant.

Le procédé comprend de plus la mise en oeuvre d'une limitation de la commande de couple corrigée C_corr1, C_corr2 en fonction du courant électrique consommé par les moteurs pour éviter de surcharger les générateurs de puissance électrique de l'aéronef qui fournissent aux unités de puissance la puissance électrique nécessaire au fonctionnement des moteurs électriques. Le couple est ainsi limité par un deuxième couple maximum C_max2.

Les données relatives à la surcharge des générateurs sont fournies à l'unité de contrôle centralisée 8 par le contrôleur de puissance électrique 20.

Le procédé comporte en outre la mise en oeuvre d'une limitation de la commande de couple corrigée C_corr1, C_corr2 en fonction de la température des générateurs électrique, pour éviter que cette température ne devienne trop importante. Le couple est ainsi limité par un troisième couple maximum C_max3.

Les données relatives à la température des générateurs sont elles aussi fournies à l'unité de contrôle centralisée 8 par le contrôleur de puissance électrique 20.

La fonction d'anti-saturation et les limitations de la commande de couple corrigée sont réalisées dans l'unité de puissance 10 associée au moteur électrique 6

Alternativement, la fonction d'anti-saturation et les limitations de la commande de couple corrigée sont réalisées simultanément par la mise en oeuvre d'une fonction de limitation combinée. Cette fonction de limitation combinée calcule un couple maximum admissible global C_maxg égal au minimum des premier, deuxième et troisième couples maximums C_max1, C_max2, C_max3, et limite la commande de couple corrigée par ce couple maximum admissible global C_maxg.

On note que le procédé de l'invention est ici inhibé dans certaines situations particulières. Une première situation particulière se produit lorsque l'aéronef 1 effectue un déplacement au sol vers l'avant et qu'une vitesse négative est commandée. Une deuxième situation particulière se produit lorsque l'aéronef 1 effectue un déplacement vers l'arrière et qu'une vitesse positive est commandée. Une troisième situation particulière se produit lorsqu'une vitesse inférieure à une vitesse présente de l'aéronef 1 est commandée. Une quatrième situation particulière se produit lorsqu'un freinage d'une roue d'aéronef 1 est commandé via le système de freinage. Une cinquième situation particulière se produit lorsqu'une vitesse de roue trop importante est commandée.

Le procédé est inhibé dans les trois premières situations pour éviter qu'un phénomène de freinage régénératif ne se produise : l'alimentation électrique du moteur 6 conduirait non pas à entraîner les roues mais tendrait à les freiner et à produire une énergie tendant à augmenter la température du moteur électrique. Le procédé est inhibé dans la quatrième situation pour éviter toute perte d'efficacité du freinage et tout dommage mécanique impactant le moteur 6 ou l'actionneur d'entraînement 5. Le procédé est inhibé dans la cinquième situation pour éviter tout dommage mécanique ou électrique impactant le moteur 6 ou l'actionneur d'entraînement 5.

Dans un second mode de réalisation, et en référence à la figure 6, la consigne de vitesse Cons_v et la consigne d'accélération Cons_a des deux roues extérieures 4a, 4b sont propres à chacune des roues : la régulation en vitesse et en accélération des deux roues extérieures 4a, 4b est réalisée via deux régulations parallèles et indépendantes.

Dans le second mode de réalisation, une consigne de vitesse Cons_v1 de la première roue extérieure 4a et une consigne de vitesse Cons_v2 de la deuxième roue extérieure 4b sont obtenues à partir de la vitesse sol de l'aéronef $V_s$, de l'angle d'orientation $\alpha$ des roues orientables et de caractéristiques structurelles de l'aéronef 1. Ainsi, la consigne de vitesse Cons_v1 de la première roue extérieure 4a est égale à :

$$Cons\_v_1 = (1 - \frac{L_y}{L_x}\tan\alpha).Vs \quad ,$$

la consigne de vitesse Cons_v2 de la deuxième roue extérieure 4b est égale à :

$$Cons\_v_2 = (1 + \frac{L_y}{L_x}\tan\alpha).Vs \quad , \quad \text{avec} \quad L_y = \frac{l_y + w}{2} \quad ,$$

où $L_y$ est la distance entre un axe central longitudinal de l'aéronef 1 et un point central Pc d'une roue extérieur 4a ou 4b, $l_y$ est la distance entre les centres Ce1 et Ce2 des essieux des deux atterrisseurs principaux, et w est la distance entre deux points centraux des deux roues d'un même atterrisseur principal.

L'invention n'est pas limitée aux modes de mise en oeuvre particuliers qui viennent d'être décrits, mais, bien au contraire, couvre toute variante entrant dans le cadre de l'invention telle que définie par les revendications.

Bien que l'on ait choisi d'équiper d'actionneurs d'entraînement les roues extérieures des atterrisseurs principaux de l'aéronef, le procédé de l'invention peut bien sûr être mis en oeuvre sur une ou des roues différentes. De même, l'invention est bien sûr applicable à des aéronefs ayant un nombre d'atterrisseurs différent, un nombre de roues .différent, ou bien une disposition de roues sur les atterrisseurs différente.

Pour illustrer l'invention, on a utilisé une architecture de commande regroupant une unité centralisée comportant un module d'acquisition et un module de traitement, des unités de puissance, etc. L'invention peut bien sûr être mise en oeuvre au sein d'une architecture différente présentant une répartition différente des fonctions à l'intérieur d'équipements différents. Par exemple, l'unité centralisée pourrait comporter un module de puissance centralisé remplaçant les unités de puissance, etc.

On observe par ailleurs que le procédé de commande de l'invention peut être mis en oeuvre très simplement dans tout type d'aéronef dont au moins une roue est équipée d'un moteur électrique pour entraîner en rotation ladite roue. Pour mettre en oeuvre le procédé de commande de l'invention dans une architecture de commande existante, il suffit en effet de programmer les boucles d'asservissement dans une unité centralisée de cette architecture. Il n'est donc pas nécessaire d'ajouter des équipements électriques à l'architecture existante, de remplacer des câbles, etc.

De même, bien que l'on ait indiqué que l'ordre de vitesse est transmis directement à l'unité de contrôle centralisée suite à une action du pilote sur la manette de pilotage, l'ordre de vitesse peut aussi être généré par un calculateur, notamment dans le cadre d'un roulage automatique de l'aéronef.

Bien que l'on ait indiqué que le signal représentatif de l'accélération de la roue Ar est obtenu par dérivation du signal représentatif de la vitesse de la roue Vr, ce signal peut aussi être obtenu par une mesure de l'accélération de la roue, réalisée par exemple par un accéléromètre positionné sur la roue.

De même, bien que l'on ait décrit que le signal de retour de la première boucle d'asservissement est un signal représentatif de la vitesse de la roue, et que le signal de retour de la deuxième boucle d'asservissement est un signal représentatif de l'accélération de la roue, il est possible d'utiliser comme signaux de retour un signal représentatif de la vitesse de l'aéronef et un signal représentatif de l'accélération de l'aéronef, lesdites vitesse de l'aéronef et accélération de l'aéronef étant de préférence une vitesse longitudinale de l'aéronef et une accélération longitudinale de l'aéronef. Ces signaux représentatifs sont obtenus par mesure, ou par estimation, ou par calcul, etc.

On a évoqué une première fonction de saturation 39 de couple ainsi qu'une fonction d'anti-saturation et des limitations de la commande de couple correspondant à des limitations par des couples maximums C_max1, C_max2, C_max3. Il est de plus possible de prévoir des fonctions additionnelles de limitation et de saturation pour mettre en oeuvre des mesures de protection additionnelles, en définissant au moins un nouveau couple maximum de limitation, sans modifier ni structurellement ni fonctionnellement la régulation. Ces mesures de protection additionnelle visent par exemple à protéger des éléments mécaniques de l'actionneur, ou bien à protéger les générateurs de puissance électrique de l'aéronef contre une surtension, etc. Lorsque la fonction d'anti-saturation et les limitations de la commande de couple corrigée sont réalisées simultanément par la mise en oeuvre d'une fonction de limitation combinée, il suffit alors de recalculer le couple maximum admissible global C_maxg en tenant compte de ce nouveau couple maximum de limitation.

## Revendications

1. Procédé de commande d'un moteur électrique d'entraînement en rotation d'une roue d'aéronef (4a, 4b) destiné à générer une commande de couple pour commander le moteur, le procédé étant **caractérisé en ce qu'**il comprend la mise en oeuvre :

   - d'une première boucle d'asservissement (23) ayant pour signal d'entrée une consigne de vitesse (Cons_v), pour signal de retour un signal représentatif de la vitesse de la roue (Vr) ou de l'aéronef, et pour signal de sortie une consigne d'accélération (Cons_a) ;
   - d'une deuxième boucle d'asservissement (24) ayant pour signal d'entrée la consigne d'accélération (Cons_a), pour signal de retour un signal représentatif de l'accélération de la roue (Ar) ou de l'aéronef, et pour signal de sortie la commande de couple.

2. Procédé de commande selon la revendication 1, dans lequel la première boucle d'asservissement comporte un premier soustracteur (27) destiné à calculer une erreur de vitesse (εv) en retranchant à la consigne de vitesse le signal représentatif de la vitesse de la roue, un bloc de gain destiné à multiplier l'erreur de vitesse (εv) par un gain prédéterminé de manière à générer une commande d'accélération, et une fonction de limitation pour limiter la commande d'accélération et générer la consigne d'accélération.

3. Procédé de commande selon la revendication 2, dans lequel la fonction de limitation est une pente d'accélération en fonction d'une vitesse sol (Vs) de l'aéronef (1).

4. Procédé de commande selon l'une des revendications précédentes, dans lequel la deuxième boucle d'asservissement (24) comporte un deuxième soustracteur (31) destiné à calculer une erreur d'accélération (εa) en retranchant à la consigne d'accélération le signal représentatif de l'accélération de la roue, une première branche (33) comportant un filtre passe-bas (34), une deuxième branche (35) parallèle à la première branche (33)comportant un intégrateur (36), et un sommateur (42) destiné à additionner des signaux provenant des première et deuxième branches.

5. Procédé de commande selon l'une des revendications précédentes destiné à commander les moteurs électriques d'une première et d'une deuxième roues d'aéronef, dans lequel, pour le moteur (6a) de la première roue (4a) et pour le moteur (6b) de la deuxième roue (4b), la consigne de vitesse est une consigne commune aux deux moteurs.

**6.** Procédé de commande selon la revendication 5 comprenant en outre la mise en oeuvre d'une fonction d'assistance (41) à l'orientation de l'aéronef (1), ladite fonction d'assistance ayant pour entrées la sortie de la deuxième boucle d'asservissement (24) du moteur de la première roue (4a), la sortie de la deuxième boucle d'asservissement (24) du moteur de la deuxième roue (4b), et un angle d'orientation ($\alpha$) d'une roue avant de l'aéronef, et pour sortie une première commande de couple corrigée du moteur de la première roue et une deuxième commande de couple corrigée du moteur de la deuxième roue.

**7.** Procédé de commande selon la revendication 6, dans lequel la fonction d'assistance (41) à l'orientation de l'aéronef (1) est activée et désactivée par pin-programming.

**8.** Procédé de commande selon l'une des revendications 1 à 4 destiné à commander les moteurs électriques d'une première et d'une deuxième roues d'aéronef, dans lequel, pour le moteur de la première roue (4a) et pour le moteur de la deuxième roue (4b), la consigne de vitesse est propre à chaque roue et le signal représentatif de la vitesse de chaque roue est une mesure de vitesse de chaque roue.

**Patentansprüche**

**1.** Verfahren zum Steuern eines Elektromotors zum Drehantrieb eines Luftfahrzeugrades (4a, 4b), das dazu bestimmt ist, einen Drehmomentbefehl zu erzeugen, um den Motor zu steuern, wobei das Verfahren **dadurch gekennzeichnet ist, dass** es umfasst die Implementierung:

- eines ersten Regelkreises (23), der als Eingangssignal einen Geschwindigkeitssollwert (Cons_v), als Rückkopplungssignal ein für die Geschwindigkeit des Rades (Vr) oder des Luftfahrzeugs repräsentatives Signal und als Ausgangssignal einen Beschleunigungssollwert (Cons_a) hat;
- eines zweiten Regelkreises (24), der als Eingangssignal den Beschleunigungssollwert (Cons_a), als Rückkopplungssignal ein für die Beschleunigung des Rades (Ar) oder des Flugzeuges repräsentatives Signal und als Ausgangssignal den Drehmomentbefehl hat.

**2.** Steuerverfahren nach Anspruch 1, bei dem der erste Regelkreis einen ersten Subtrahierer (27) umfasst, der dazu bestimmt ist, einen Geschwindigkeitsfehler ($\varepsilon v$) zu berechnen, indem von dem Geschwindigkeitssollwert das für die Geschwindigkeit des Rades repräsentative Signal abgezogen wird, einen Verstärkungsblock, der dazu bestimmt ist, den Geschwindigkeitsfehler ($\varepsilon v$) mit einer vorgegebenen Verstärkung zu multiplizieren, damit ein Beschleunigungsbefehl erzeugt wird, und eine Begrenzungsfunktion, um den Beschleunigungsbefehl zu begrenzen und den Beschleunigungssollwert zu erzeugen.

**3.** Steuerverfahren nach Anspruch 2, bei dem die Begrenzungsfunktion ein Beschleunigungsanstieg in Abhängigkeit einer Bodengeschwindigkeit (Vs) des Luftfahrzeugs (1) ist.

**4.** Steuerverfahren nach einem der vorhergehenden Ansprüche, bei dem der zweite Regelkreis (24) einen zweiten Subtrahierer (31) umfasst, der dazu bestimmt ist, einen Beschleunigungsfehler ($\varepsilon a$) zu berechnen, indem von dem Beschleunigungssollwert das für die Beschleunigung des Rades repräsentative Signal abgezogen wird, einen ersten Zweig (33), der ein Tiefpassfilter (34) umfasst, einen zum ersten Zweig (33) parallelen zweiten Zweig (35), der einen Integrator (36) umfasst, sowie einen Summierer (42), der dazu bestimmt ist, Signale, die aus dem ersten und zweiten Zweig stammen, zu addieren.

**5.** Steuerverfahren nach einem der vorhergehenden Ansprüche, das dazu bestimmt ist, die Elektromotoren eines ersten und eines zweiten Luftfahrzeugrades zu steuern, bei dem für den Motor (6a) des ersten Rades (4a) und für den Motor (6b) des zweiten Rades (4b) der Geschwindigkeitssollwert ein für beide Motoren gemeinsamer Sollwert ist.

**6.** Steuerverfahren nach Anspruch 5, ferner umfassend die Implementierung einer Unterstützungsfunktion (41) zur Unterstützung bei der Ausrichtung des Luftfahrzeugs (1), wobei die Unterstützungsfunktion als Eingänge den Ausgang des zweiten Regelkreises (24) des Motors des ersten Rades (4a), den Ausgang des zweiten Regelkreises (24) des Motors des zweiten Rades (4b) und einen Ausrichtungswinkel ($\alpha$) zur Ausrichtung eines Vorderrades des Luftfahrzeugs hat, sowie als Ausgang einen korrigierten ersten Drehmomentbefehl des Motors des ersten Rades und einen korrigierten zweiten Drehmomentbefehl des Motors des zweiten Rades.

**7.** Steuerverfahren nach Anspruch 6, bei dem die Unterstützungsfunktion (41) zur Unterstützung der Ausrichtung des Luftfahrzeugs (1) durch Pin-Programmierung aktiviert und deaktiviert wird.

8. Steuerverfahren nach einem der Ansprüche 1 bis 4, das dazu bestimmt ist, die Elektromotoren eines ersten und eines zweiten Luftfahrzeugrades zu steuern, bei dem für den Motor des ersten Rades (4a) und für den Motor des zweiten Rades (4b) der Geschwindigkeitssollwert für jedes Rad spezifisch ist und das für die Geschwindigkeit jedes Rades repräsentative Signal eine Messung der Geschwindigkeit jedes Rades ist.

## Claims

1. A control method for controlling an electric motor driving rotation of an aircraft wheel (4a, 4b) for generating a torque command for controlling the motor, the method being **characterized in that** it comprises implementing:

   • a first servo-control loop (23) having as its input signal a speed setpoint (Cons_v), having as its return signal a signal representative of the speed (Vr) of the wheel or of the aircraft, and having as its output signal an acceleration setpoint (Cons_a); and
   • a second servo-control loop (24) having as its input signal the acceleration setpoint (Cons_a), as its return signal a signal representative of the acceleration (Ar) of the wheel or of the aircraft, and as its output signal the torque command.

2. A control method according to claim 1, wherein the first servo-control loop includes a first subtracter (27) for calculating a speed error ($\varepsilon v$) by subtracting the signal representative of the speed of the wheel from the speed setpoint, a gain block for multiplying the speed error ($\varepsilon v$) by a predetermined gain so as to generate an acceleration command, and a limit function for limiting the acceleration command and for generating the acceleration setpoint.

3. A control method according to claim 2, wherein the limit function is a slope of acceleration as a function of ground speed (Vs) of the aircraft (1).

4. A control method according to any preceding claim, wherein the second servo-control loop (24) includes a second subtracter (31) for calculating an acceleration error ($\varepsilon a$) by subtracting the signal representative of the acceleration of the wheel from the acceleration setpoint, a first branch (33) including a lowpass filter (34), a second branch (35) parallel with the first branch (33) and including an integrator (36), and a summing circuit (42) for adding together the signals from the first and second branches.

5. A control method according to any preceding claim for controlling the electric motors of first and second aircraft wheels, wherein for the motor (6a) of the first wheel (4a) and for the motor (6b) of the second wheel (4b), the speed setpoint is a setpoint common to both motors.

6. A control method according to claim 5, further including implementing an assistance function (41) for providing assistance to steering the aircraft (1), said assistance function having as inputs the output from the second servo-control loop (24) of the motor of the first wheel (4a), the output of the second servo-control loop (24) of the motor of the second wheel (4b), and the steering angle ($\alpha$) of a nosewheel of the aircraft, and having as its output a first corrected torque command for the motor of the first wheel and a second corrected torque command for the motor of the second wheel.

7. A control method according to claim 6, wherein the assistance function (41) for providing assistance in steering the aircraft (1) is activated and deactivated by pin-programming.

8. A control method according to any one of claims 1 to 4 for controlling the electric motors of first and second aircraft wheels, wherein, for the motor of the first wheel (4a) and for the motor of the second wheel (4b), the speed setpoint is specific to each wheel, and the signal representative of the speed of each wheel is a measurement of the speed of each wheel.

Fig. 1a

Fig. 1b

Fig. 2

Couple appliqué
par le moteur

C_max1

ΔC

C_corr1,
C_corr2

Temps

Fig. 4

Marge de couple

ΔC

Temps

Fig. 5

Cons_v2

4b

Ce2

$l_y$

Vs

X

Ce1

$L_y$

W

Cons_v1

Pc

4a

α

$L_x$

α

Fig. 6